Europäisches Patentamt

European Patent Office

Office européen des brevets

(19)

(11) Numéro de publication: **0 053 545 B1**

(12) **FASCICULE DE BREVET EUROPEEN**

(45) Date de publication du fascicule du brevet:
01.08.84

(51) Int. Cl.³: **H 04 B 9/00, H 04 B 1/62**

(21) Numéro de dépôt: **81401842.0**

(22) Date de dépôt: **20.11.81**

(54) **Système de transmission d'informations à modulation directe de la lumière à liaison optique à bande passante étendue vers les fréquences basses et le continu.**

(30) Priorité: **02.12.80 FR 8025560**

(43) Date de publication de la demande:
**09.06.82 Bulletin 82/23**

(45) Mention de la délivrance du brevet:
**01.08.84 Bulletin 84/31**

(84) Etats contractants désignés:
**AT BE CH DE GB IT LI SE**

(56) Documents cités:
**FR - A - 2 364 572**
**GB - A - 499 317**
**US - A - 3 984 824**

**INSTITUTE OF ELECTRONICS AND COMMUNICATION ENGINEERS OF JAPAN, International conference on integrated optics, and optical fiber communication 1977. Technical Digest, 18-20 juillet 1977 TOKYO (JP) L. UMEBU et al.: "GaAlAs led's for high quality fiber-optical analog link" pages 109-112**

(73) Titulaire: **THOMSON-CSF, 173, Boulevard Haussmann, F-75379 Paris Cedex 08 (FR)**

(72) Inventeur: **Eumurian, Grégoire, THOMSON-CSF SCPI 173, bld Huassmann, F-75360 Paris Cedex 08 (FR)**

(74) Mandataire: **Trocellier, Roger et al, THOMSON-CSF SCPI 173, Bld Haussmann, F-75379 Paris Cedex 08 (FR)**

ACTORUM AG

**Description**

La présente invention concerne un système de transmission d'informations à modulation directe de la lumière à liaison optique et plus particulièrement à liaison optique dont on cherche à étendre la bande passante vers les fréquences basses et le continu.

On sait que l'utilisation de fibres optiques conjuguées à celle d'émetteurs optiques rapides, diodes laser en particulier et photodiodes à avalanche permet d'obtenir des liaisons à large bande allant jusqu'à 1 GHz. On sait également que les liaisons optiques présentent par rapport aux liaisons électriques l'avantage d'un isolement galvanique et d'une bande passante étendue, mais l'inconvénient d'une atténuation pouvant varier notablement en cours d'exploitation, variation de la puissance d'émission, variation des pertes des connecteurs, variation du rendement du récepteur.

Pour s'affranchir de ces variations, il est possible de coder l'information à transmettre soit en modulation de fréquence, soit en modulation par impulsion codée ou PCM (Pulse Code Modulation) suivant la terminologie anglo-saxonne.

Ces types de codage permettent en outre d'étendre la bande passante vers les fréquences basses jusqu'à la fréquence 0. Malheureusement la bande totale occupée est de 3 à 10 fois plus étendue que la bande passante utile.

La modulation directe de la puissance produite par la diode d'émission permet de réaliser une transmission dont la bande passante est identique à celle du signal utile. Mais par contre, à cause d'une série de phénomènes thermiques apparaissant tant au niveau de l'émission qu'au niveau de la réception, la transmission des fréquences basses et en particulier de la fréquence zéro se fait dans de mauvaises conditions et des défauts tels que des atténuations, distorsions, dérives apparaissent.

Le but de la présente invention est d'éliminer ces différents défauts tout en conservant les avantages de la modulation directe qui en particulier permet une transmission dont la largeur de bande occupée est minimale.

Il est déjà connu par le document de brevet FR-A--2 364 572 un système de transmission d'informations à modulation directe de la lumière, comportant des moyens d'émission optique avec une diode électroluminescente pour effectuer la conversion de signaux électriques à transmettre sous la forme de signaux optiques, par modulation directe, une liaison optique pour la transmission de ces signaux optiques, des moyens de réception optique avec une photodiode pour la conversion inverse des signaux optiques reçus en signaux électriques, et dans lequel des moyens de filtrage sont prévus pour éviter des déformations de signal résultant de la température de jonction de ces diodes respectives et améliorer le taux de modulation. Ces moyens de filtrage permettent d'éliminer les effets thermiques non linéaires des diodes et comportent, à l'émission, un filtre passe-haut déterminé pour réduire le niveau des signaux électriques dont la fréquence est plus basse qu'une valeur basse-fréquence prédéterminée, et à la réception, un filtre passe-bas ayant une fonction de transfert inverse pour établir le niveau des signaux électriques basse-fréquence.

Un objet de l'invention est d'accroître encore les performances du système en étendant la bande passante vers les fréquences basses et le continu, ceci en prévoyant également de le munir de moyens de compensation des effets thermiques linéaires produits par la diode émettrice LED ou laser et par celle de réception lorsque cette dernière n'est pas du type PIN, mais du type à avalanche, dit APD. On obtient ainsi un système où les effets thermiques linéaires et non linéaires sont compensés globalement ce qui permet de préserver la dynamique pour une exploitation très large bande avec un taux de modulation élevé.

Selon l'invention il est proposé de réaliser un système de transmission d'informations à modulation directe de la lumière caractérisé en ce qu'il comporte d'autres moyens de filtrage pour compenser les effets thermiques linéaires des diodes, ces moyens complémentaires étant disposés à la réception et comportant un deuxième filtre passe-bas déterminé pour compenser les effets thermiques linéaires produits par la diode d'émission pour les signaux électriques basse-fréquence délivrés par le filtre passe--haut des moyens d'émission; en outre, si la photodiode est du type à avalanche, ce deuxième filtre est lui-même suivi d'un troisième filtre passe-bas déterminé pour compenser les effets thermiques linéaires produits par la photodiode pour ces mêmes signaux basse-fréquence.

D'autres caractéristiques et avantages de l'invention apparaîtront dans la description ci-dessous d'exemples de réalisation, donnés à l'aide des figures qui représentent:

— la figure 1, un schéma d'une liaison optique;

— les figures 2a et 2b, les caractéristiques courant-puissance d'une diode LED et d'une diode laser respectivement;

— les figures 3a et 3b, la modulation respectivement d'une diode LED et d'une diode laser;

— les figures 4a et 4b, les modifications subies du fait de la température par les caractéristiques courant-puissance d'une diode LED et d'une diode laser respectivement;

— la figure 5, la variation de la pente de conversion d'une photodiode à avalanche en fonction de la température;

— la figure 6, le schéma de principe du système de trasmission suivant l'invention compensé pour les fréquence basses;

— la figure 7, le modèle théorique d'une diode LED;

— la figure 8, le modèle simplifié d'une diode LED;

— les figures 9a et 9b, un exemple de filtre passe haut utilisable à l'émission avec sa fonction de transfert;

— les figures 10a et 10b, un exemple de filtre passe bas utilisable à la réception à fonction de transfert inverse du précédent;

— la figure 11, le système de transmission suivant l'invention utilisant à l'émission une diode LED ou une diode laser et à la réception une photodiode PIN;

— la figure 12, un exemple d'un dispositif de polarisation de la diode d'émission, et

— la figure 13, le système de transmission suivant l'invention utilisant à l'émission une diode LED ou une diode laser et à la réception une photodiode à avalanche.

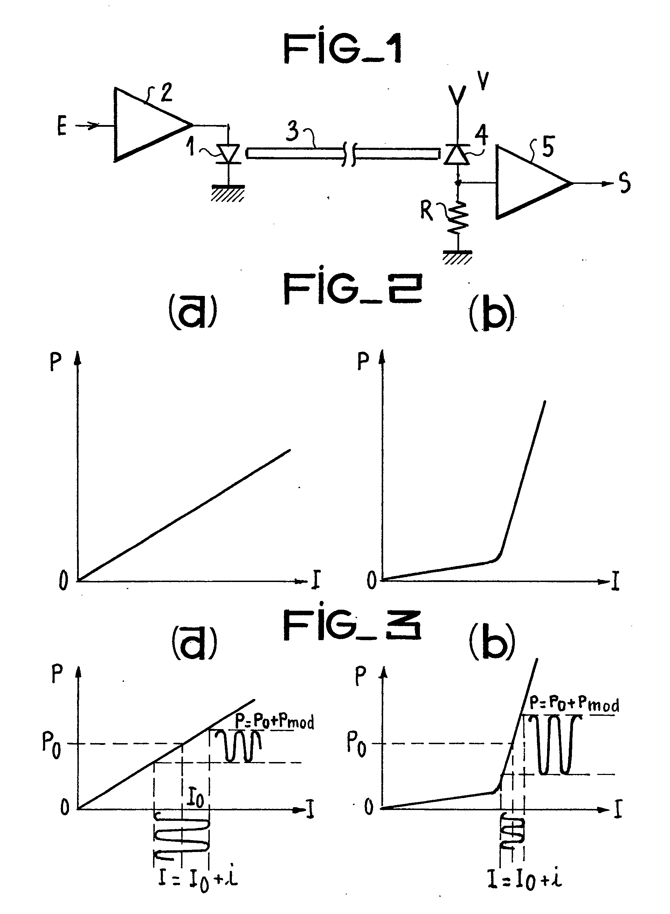

Une liaison optique dans un système de transmission visé par l'invention se compose essentiellement comme le montre la figure 1 d'un émetteur optique 1 précédé en général par un amplificateur 2, de la liaison optique proprement dite 3 et d'un récepteur optique 4 suivi d'un amplificateur 5.

La diode d'émission peut être du type LED ou laser. La photodiode de réception est de type PIN ou à avalanche. Les différents diodes d'émission sont essentiellement caractérisées par leur fonction puissance émise en fonction du courant injecté. Pour une transmission analogique, cette caractéristique doit être aussi linéaire que possible. Les différents types de diodes cités présentent des caractéristiques P-I linéaires sur toute l'étendue de la caractéristique, c'est le cas des diodes LED ou sur une partie seulement, c'est le cas des diodes laser. Ces caractéristiques sont représentées figure 2a pour une diode LED et figure 2b pour une diode laser.

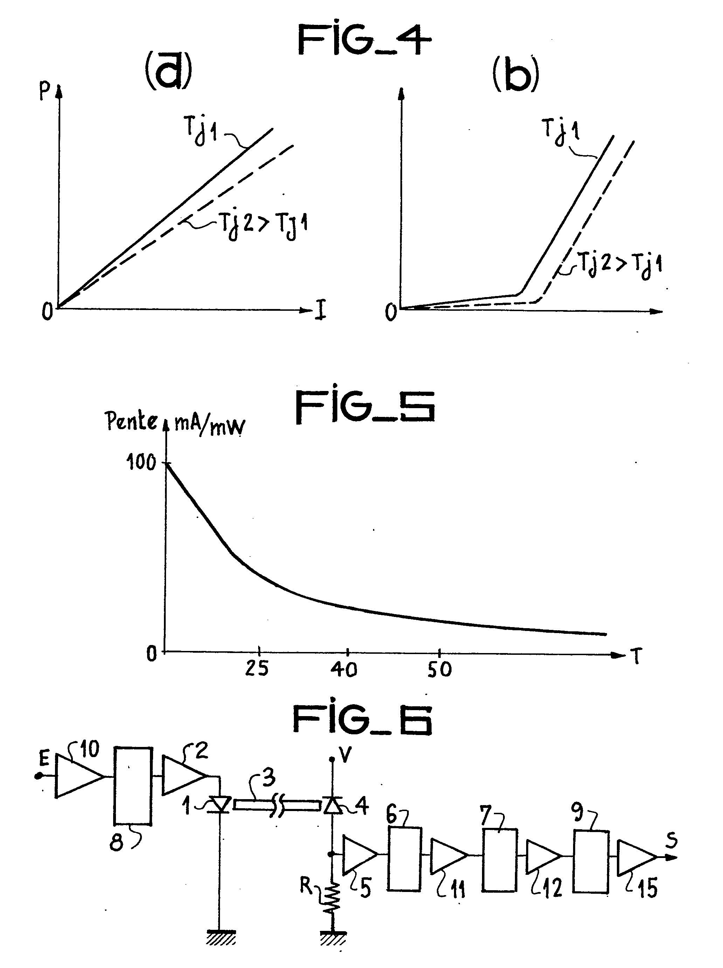

La modulation de ces diodes s'effectue en polarisant le composant à l'aide d'un courant de repos 10 et en superposant à ce dernier un courant de modulation alternatif faisant varier la puissance d'émission et constituant le signal. La figure 3a représente cette modulation pour une diode LED et la figure 3b pour une diode laser.

Les photodiodes de réception, qu'elles soient de type PIN ou à avalanche, effectuent à l'arrivée la transformation inverse en délivrant un courant proportionnel à la puissance reçue

I = gP où g représente la pente de conversion puissance-courant.

Ce courant crée une différence de potentiel à travers une résistance et peut ensuite être amplifié.

La caractéristique de conversion courant-puissance au niveau des émetteurs et la caractéristique de conversion puissance-courant au niveau des récepteurs à diode à avalanche présentent une forte dépendance en fonction de la température de la jonction. De ce fait, le comportement de ces composants est très différent suivant que le signal modulant est à fréquence basse ou élevée.

Cette dépendance se traduit généralement par une baisse de la puissance émise quand la température augmente pour les diodes d'émission et une baisse de la pente de conversion g entraînant une baisse de photocourant pour les photodiodes à avalanche.

Les figures 4a et 4b illustrent respectivement pour une diode LED et une diode laser, la dépendance de la puissance en fonction de la température.

La figure 5 illustre elle, l'évolution de la pente de conversion d'une photodiode à avalanche en fonction de la température.

Il résulte de ce qui précède que les composants sont sensibles à la température. Toutefois cette dépendance diffère suivant la vitesse de variation du courant à l'émission ou de la puissance à la réception. En effet, si le courant modulant la diode d'émission ou la puissance optique de la photodiode à avalanche varie rapidement, la température de jonction du composant n'a pas le temps de varier et reste constante dans le temps. En revanche, si la fréquence est très basse, la jonction s'échauffe ou se refroidit en fonction du niveau instantané du signal, modifie les caractéristiques des composants et introduit une déformation du signal. Cette déformation est d'autant plus importante que le signal de modulation est important.

On peut donc dire que le mauvais comportement des composants optiques cités apparaît pour un signal de basse fréquence, voire continu et de forte amplitude et que, par contre, leur comportement est correct pour les signaux de fréquence plus élevée quel que soit leur niveau et relativement correct pour les signaux basse fréquence mais de faible amplitude.

Il résulte qu'à faible niveau il y a un effet thermique linéaire dépendant de l'impédance thermique des jonctions de l'émetteur ou du récepteur à avalanche. Cet effet est provoqué par le passage progressif, en fonction de l'augmentation de la fréquence, de l'état où la température de la jonction varie avec le signal vers l'état où à cause de la vitesse de variation, la température de la jonction reste constante et égale à sa valeur au point de repos (polarisation). Cet effet linéaire de type passe-haut, est compensable à l'aide d'un ou deux filtres passe-bas 7 et 9 placés dans la chaîne optique, un filtre pour une liaison comportant une diode LED ou laser et une photodiode PIN, et deux filtres dans le cas de l'utilisation d'une diode à avalanche présentant le même type d'effet thermique que l'émetteur.

A fort niveau, l'effet thermique devient non linéaire à basse fréquence où la température de la jonction subit de fortes variations. Par contre, à fort niveau et pour les fréquences élevées, la température de la jonction n'ayant pas le temps de changer, cet effet non linéaire n'existe pas. Pour éliminer cet effet thermique non linéaire, on place avant l'émetteur un filtre de type passe-haut 8 qui limite les fréquences basses à un niveau faible et ceci jusqu'à une fréquence au-delà de laquelle les phénomènes thermiques ne se produisent plus, et à la réception un filtre passe-bas 6 de fonction de transfert inverse qui rétablit parfaitement la forme du signal.

La figure 6 donne le schéma de principe d'une chaîne compensée pour les fréquences basses.

On constate qu'à cause du filtre passe-haut placé à l'émission la puissance basse-fréquence atteignant la photodiode est à faible niveau et il n'y a donc pas d'effets thermiques non linéaires au niveau du récepteur.

On notera que le schéma de principe de la figure 6 est utilisable quel que soit le type d'émetteur ou de récepteur utilisé, seule la valeur des fréquences de coupure des filtres étant modifiée suivant le cas.

Dans qui suit on analyse plus en détail le fonctionnement d'une chaîne optique comportant une diode d'émission LED et une photodiode de réception de type PIN. Dans ce type de liaison seule la diode d'émission est sensible à la température, la photodiode PIN présentant une réponse constante. La puissance émise par une diode LED varie linéairement avec le courant injecté ceci pour une température donnée de la jonction.

Par ailleurs, la température de la jonction dépend de la puissance dissipée dans la diode, de la température ambiante et de la résistance thermique entre la jonction et le boîtier, et entre le boîtier et la température ambiante.

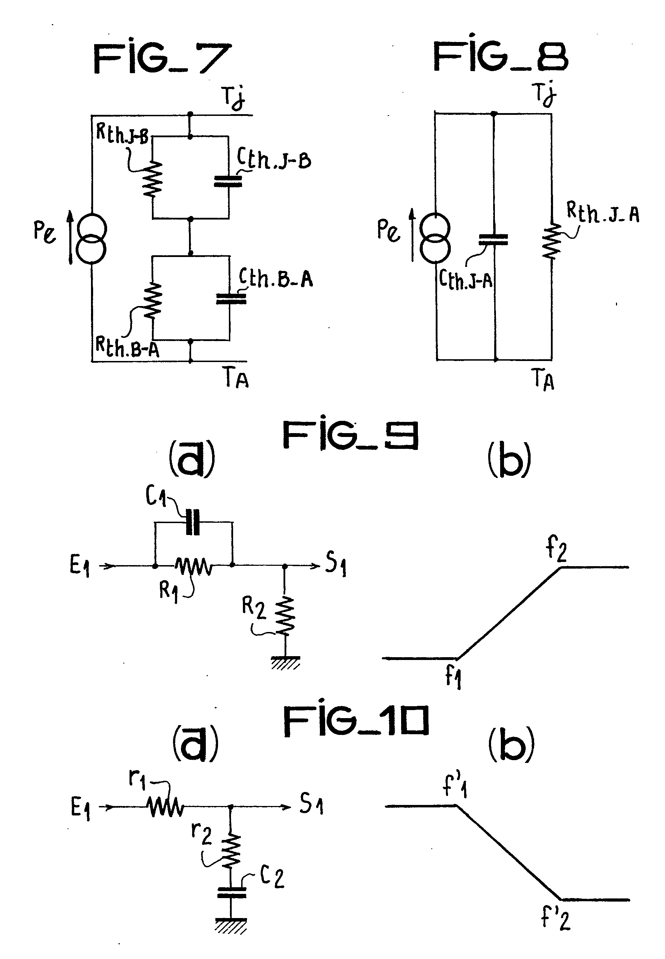

Chacune des résistances thermiques est en parallèle avec une capacité thermique et l'on peut donner suivant la figure 7 le modèle théorique de la diode dans lequel les symboles utilisés représentent:

$P_e$ la puissance électrique dissipée dans la diode

$T_j$ la température de jonction

$T_A$ la température ambiante

$T_B$ la température du boîtier

$Rth_{J-B}$ la résistance thermique jonction-boîtier

$Rth_{B-A}$ la résistance thermique boîtier-ambiante

$Cth_{J-B}$ la capacité thermique jonction-boîtier

$Cth_{B-A}$ la capacité thermique boîtier-ambiante.

Si la diode est montée sur un radiateur de résistance thermique faible, il y a peu de différence entre la température du boîtier et la température ambiante et le modèle peut se simplifier, devenant tel que représenté figure 8 où seules sont considérées:

la résistance thermique jonction-ambiante $Rth_{J-A}$

et la capacité thermique jonction-ambiante $Cth_{J-A}$

La puissance électrique injectée dans la diode, $P_e$ dépend du courant qui traverse la diode ainsi que de sa tension, ce dernier paramètre étant sensiblement indépendant du courant dans le cas d'une diode LED ou laser.

On peut écrire $P_e = IV_D$ avec I courant dans la diode LED, $V_D$ tension constante aux bornes de la diode.

La température de la jonction peut se déterminer en fonction de la puissance électrique et de l'impédance thermique:

$$Zth = \frac{Rth_{J-A}}{1 + Rth_{J-A}\, Cth_{J-A}S} \qquad (1)$$

de la jonction (avec $s = j\omega$)

$$P_e = IV_D = (Io + i)\, Vb$$

avec:

$Io$ = courant moyen de polarisation

$i$ = courant alternatif

$T_J = T_A + IoV_DRth_{J-A} + iV_DZth$

$T_J = T_{A'} + iV_DZth$

avec

$T_{A'} = T_A + IoV_DRth_{J-A}$ = température de la jonction en absence de modulation.

La puissance optique émise par la diode peut s'écrire:

$P_{opt} = gIK$

Dans cette relation g représente la pente de conversion courant-puissance optique et K un coefficient dépendant de la température de la jonction:

$$K = 1 - m(Tj - T_{Jref})$$

avec:

$m$ = constante $\ll 1$

$T_{Jref}$ = température de référence.

A partir de la valeur de $P_e$ et de K on peut écrire:

$$Popt = g(Io + i)K = g(Io + i)$$
$$[1 - m(T_{A'} + iV_DZth - T_{Jref})]$$

Si on note $T_{A'} - T_{Jref} = To'$

$$Popt = g(Io + i)(1 - mTo' - mV_DZ_{th}i)$$

On peut mettre en évidence la puissance continue et la puissance alternative de modulation:

$$Popt = Po + Pmod = gIo(1 - mTo') + \\ + [g(1 - mTo') - IomV_DZth]i - gmV_DZthi^2$$

Avec $Po = gIo(1 - mTo')$

(2) $\quad Pmod = [g(1 - mTo') - IomV_DZth]i - gmV_DZthi^2$

Ces relations relient le courant injecté dans la diode et la puissance optique émise. On constate que le signal modulé ne varie pas linéairement avec le courant de la modulation. A partir de la valeur de Pmod on peut distinguer plusieurs cas:

a) Modulation à fréquence élevée (niveau faible ou fort)

Dans ce cas $s \to \infty$ et $Zth \to O$

$$(Pmod)_{f \to \infty} = g(1 - mTo')i$$

soit une dépendance linéaire de la puissance modulée en fonction du courant.

b) Modulation à niveau très faible

Dans ce cas le terme en $i^2$ devient négligeable devant le terme en i.

$$(Pmod)_{i \to 0} = [g(1 - mTo') - IomV_DZth]i$$

On obtient encore une dépendance linéaire de la puissance en fonction du courant mais la pente de modulation est passée de $g(1 - mTo')$ à $g(1 - mTo') - IomV_DZth$, soit une valeur plus faible et dépendant de l'impédance thermique Zth de la jonction.

c) Modulation à niveau élevé et fréquence basse

Dans ce type de modulation:

$$Pmod = [g(1 - mTo') - IomV_DZth]i - gmV_DZthi^2$$

La puissance modulée varie paraboliquement avec le courant et dépend de la résistance thermique. Il y a donc apparition d'une distorsion du signal, (cette distorsion disparaît complètement si la fréquence de modulation devient élevée).

Ces différents types de comportement sont dus au fait qu'aux fréquences élevées comme cela a été dit précédemment, la température de la jonction n'a pas le temps d'évoluer quelle que soit l'amplitude du signal et qu'à faible amplitude le signal émis sous forme de puissance optique, quoique dépendant de l'impédance thermique, varie linéairement; de fait on balaye une faible partie de la parabole qui est assimilable avec sa tangente au point de polarisation.

Il est ainsi parfaitement possible de corriger en basse fréquence le comportement de l'émetteur LED.

Suivant l'invention, on affaiblit, à l'aide d'un filtre passe-haut, le signal électrique servant à moduler la diode LED et l'on en revient à un modulateur à faible niveau en basse fréquence, et à niveau normal en haute fréquence.

On rétablit, à l'aide d'un filtre de fonction de transfert inverse et placé après la photodiode PIN de réception, le signal correct.

On corrige, à l'aide d'un filtre passe-bas placé à la réception, l'effet linéaire dû à l'impédance thermique de la jonction.

La nécessité de la dernière correction apparaît clairement si on remplace la valeur de Zth (1) dans la relation (2) Pmod:

$$Pmod = [g(1 - mTo') - lomV_D \frac{R_{th}}{1 \cdot R_{th}C_{th}s}]i -$$

$$- gmV_D \cdot \frac{R_{th} \, i^2}{1 + R_{th}C_{th}s}$$

On peut écrire Pmod sous la forme:

$$Pmod = K1 \frac{s+a}{s+b} i - K2 \, i^2 \frac{1}{s+b}$$

avec:

$$b = \frac{1}{Rth_{J-A} \, Cth_{J-A}}$$

$$a = \frac{1}{Rth_{J-A} \, Cth_{j-A}} - \frac{lomVD}{Cth_{J-A} \, g(1 - mTo')}$$

Si on effectue, avant ou après modulation, une correction

$$i = i' \frac{s+b}{s+a}$$

(d'après les expressions de a et b on voit que a < b), la puissance modulée, sera de:

$$Pmod' = K_1i' - K2 \left(\frac{s+b}{s+a}\right)^2 \frac{1}{s+b} (i')^2$$

Compte tenu de l'effet d'affaiblissement des fréquences basses, dû au filtre de correction placé à l'arrivée, $(i')^2$ sera faible et donc le deuxième terme sera négligeable pour les fréquences basses et également négligeable pour les fréquences hautes car:

$$\left(\frac{s+b}{s+a}\right) \frac{1}{s+b} \rightarrow 0 \text{ quand } s \rightarrow \infty$$

Dans ces conditions, la modulation est ramenée à:
Pmod' = $K_1i'$ indépendante de la fréquence.

On est ainsi amené à prévoir deux filtres pour le passage des fréquences basses: l'un passe-haut 8 à l'émission et l'autre passe-bas 6 à la réception ayant pour rôle d'éviter la distorsion en fonction du niveau en basse fréquence et d'un filtre passe-bas 7 corrigeant les effets thermiques aux fréquences basses et à faible niveau. Les deux premiers filtres évitent l'apparition de phénomènes thermiques non linéaires et le troisième corrige les effets thermiques linéaires.

Les deux filtres de correction des effets thermiques 8 et 6 non linéaires doivent avoir des fonctions de transfert inverses de manière que leurs effets se compensent mutuellement.

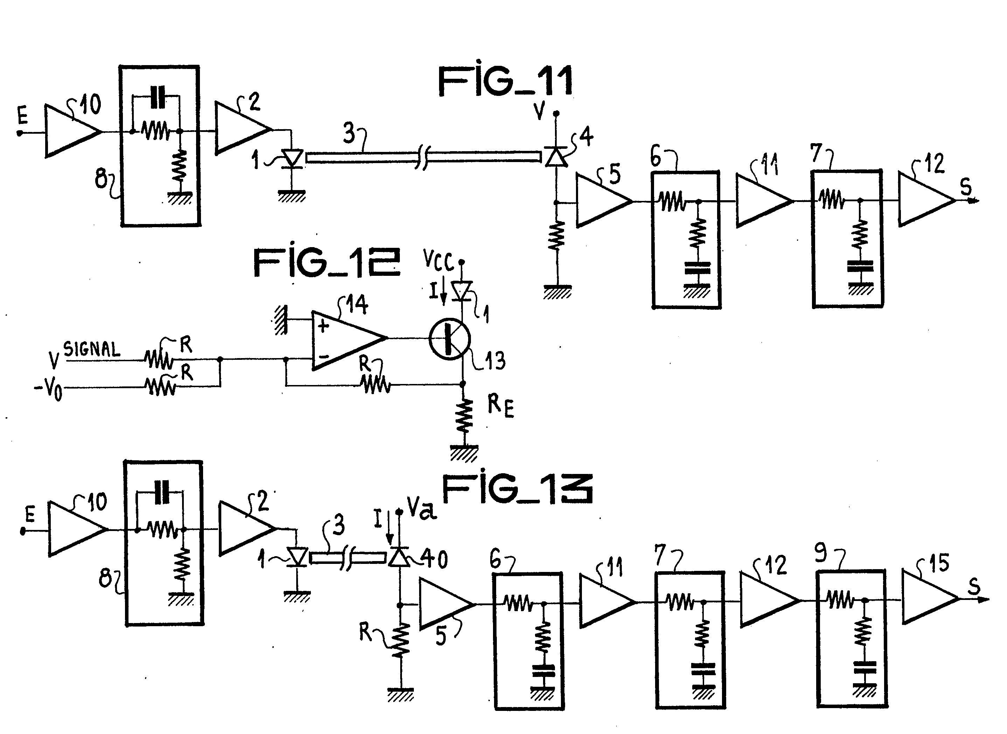

Les figures 9 donnent un exemple de filtre passe-haut 8 utilisable à l'émission ainsi que sa fonction de transfert.

Cette fonction de transfert est:

$$T_E = \frac{s + \dfrac{1}{R1C1}}{s + \dfrac{1}{\dfrac{R1 \, R2}{R1 + R2} Cl}}$$

et les fréquences f1 et f2 caractéristiques du filtre sont:

$$f_1 = \frac{1}{2\pi \, R1 \, C1}$$

$$f_2 = \frac{1}{\dfrac{2\pi \, R1 \, R2}{R1 + R2} Cl}$$

Le filtre correspondant 6 utilisable à la réception est représenté figure 10. La fonction de transfert de ce filtre est

$$T_R = \frac{r2}{r1 + r2} \frac{s + \dfrac{1}{r2 \, C2}}{s + \dfrac{1}{(r1 + r2) \, C2}}$$

et les fréquences caractéristiques sont données par:

$$f'1 = \frac{1}{2\pi \, (r1 + r2) \, C2}$$

$$f'1 = \frac{1}{2\pi \, (r1 + r2) \, C2}$$

$$f'2 = \frac{1}{2\pi \, r2 \, C2}$$

Les composants de ces deux filtres, l'un à l'émission, l'autre à la réception doivent être choisis pour avoir:

f1 = f1' et f2 = f2', soit:

$$R1C1 = (r1 + r2)C2 \text{ et } \frac{R1R2}{R1 + R2} C1 = r2C2$$

Le filtre passe-bas 7 de correction des effets thermiques linéaires doit avoir comme fonction de transfert:

$$\frac{s+b}{s+a}$$

avec:

$$a = \frac{1}{Rth_{J-A}Cth_{J-A}} - \frac{I_omV_D}{Cth_{J-A}g(1 - mTo')}$$

$$b = \frac{1}{Rth_{J-A}Cth_{J-A}}$$

Ce filtre est du même type que le précédent, seules les valeurs des composants diffèrent.

Pour les deux filtres 8 et 6 de correction de l'effet thermique non linéaire, les fréquences f1 et f2 doivent être choisies pour avoir à la fréquence de coupure thermique:

$$f_{th} = \frac{1}{2 \, Rth_{J-A} \, Cth_{J-A}}$$

un affaiblissement suffisant des fréquences basses à l'émission. On pourra prendre par exemple f1 $\geq$ 10$f_{th}$ et f2/f1 voisin de 10. De cette manière les fréquences basses de niveau élevé sont affaiblies dans la zone des fréquences des phénomènes thermiques d'au moins 20 dB et le signal reprend son niveau normal à partir de fréquences cent fois plus élevées que la fréquence de coupure thermique $f_{th}$ ce qui limite l'effet thermique non linéaire sur ces fréquences.

La figure 11 représente le schéma complet de la liaison optique compensée pour les fréquences basses. On notera et cela est normal que ce schéma ressemble au schéma de la figure 6, de sorte que les références utilisées seront les mêmes. A partir de l'entrée E de la chaîne on trouve un amplificateur 10, tampon suivi d'un filtre 8, passe-haut destiné à corriger les effets thermiques non linéaires de la diode LED 1 d'émission, séparée du filtre par un amplificateur 2. La liaison optique 3 proprement dite alimente une photodiode de réception 4 du type PIN suivie d'un amplificateur 5, connecté au filtre passe-bas 6, chargé de corriger les effets thermiques non linéaires de la diode LED 1 d'émission. Un amplificateur tampon 11 sépare ce filtre 6 du filtre 7 passe-bas chargé de corriger les effets thermiques linéaires de la diode LED d'émission.

On pourra noter que le filtre passe-bas 7 de correction des effets thermiques linéaires dus à la diode d'émission est représenté dans le cas où l'impédance thermique de la diode Zth est une résistance thermique shuntée par une capacité thermique. Dans le cas général, ce filtre doit avoir comme fonction de transfert l'inverse de la fonction de transfert dû à l'effet thermique, soit:

$$\frac{1}{g(1 - mTo') - lomV_DZth}$$

On pourra noter également que le dispositif de polarisation de la diode d'émission non représenté figure 11 peut être, par exemple, un transistor 13 monté en source de courant variable et précédé par un amplificateur 14 opérationnel comme le montre la figure 12; on a

$$I = \frac{Vo}{RE} - \frac{V\ signal}{RE} = lo+i$$

Dans ce qui suit on analyse plus en détail le fonctionnement d'un chaîne optique comportant une diode laser à l'émission et une photodiode du type PIN à la réception.

Dans ce type de liaison, comme dans le cas précédent ou des diodes LED étaient envisagées, seul l'émetteur est sensible à la température, la photodiode PIN présentant une réponse constante.

Le modèle thermique de la diode laser est identique à celui de la diode LED et se réduit avec l'utilisation d'un radiateur de résistance thermique faible, à une impédance thermique constituée d'une résistance thermique en parallèle avec une capacité thermique:

$$Z_{th} = \frac{Rth}{1 + Rth\ Cth\ s} \quad avec \quad s = j\omega$$

La puissance optique émise par un laser peut être reliée au courant injecté par la relation:

Popt = g(I - Is)   avec  g = pente de conversion courant-puissance
Is = courant de seuil

Le courant de seuil dépend de la température d'une manière exponentielle suivant la loi:

$$Is = Iso\ exp\ (\frac{T_J - T_{Jo}}{T_R})$$

avec:

Iso = courant de seuil pour une température de jonction de $T_{Jo}$

$T_R$ = constante ayant les dimensions d'une température.

La dépendance exponentielle du courant de seuil en fonction de la température montre clairement qu'en cas de modulation de courant autour d'une valeur moyenne, la puissance modulée subira une déformation vers les fréquences basses où la température de la jonction varie suivant la modulation.

Il apparaît judicieux de limiter, de la même manière que pour la diode LED, l'amplitude des fréquences basses. Cette limitation peut se faire avec le même type de filtre passe-haut. Le filtre passe-bas de rétablissement de la fonction de transfert est également identique à celui utilisé pour la diode LED et se trouve placé après la photodiode PIN.

Après diminution du niveau des fréquences basses, la température de la jonction présente des variations relativement faibles au cours de la modulation. On peut donc effectuer un développement limité de l'expression donnant le courant de seuil soit:

$$Is \# Iso\ (1 + \frac{T_J - T_{Jo}}{T_R})$$

Le courant laser est composé d'un courant de polarisation lo et d'un courant de modulation soit:

I = lo+i

Dans ces conditions, la température de la jonction est:

$T_J = T_A + RthV_Dlo + ZthV_Di$

expression dans laquelle:

$T_A$ est la température ambiante

$V_D$ la tension laser, constante et voisine de 2 volts.

La valeur de Is peut alors s'écrire:

$$Is = Iso\ (1 + \frac{T_A - T_{Jo} + RthV_Dlo + ZthV_Di}{T_R})$$

$$= Iso\ (1 + \alpha + \beta Zthi)$$

avec

$$\alpha = \frac{T_A - T_{Jo} + RthV_Dlo}{T_R}$$

$$\beta = \frac{V_D}{T_R}$$

Sous l'action du courant I = lo + i, le laser émet une puissance P = Po + Pmod (Po: puissance continue; Pmod: puissance modulée).

$$P = Po + Pmod = g(lo + i - Is)$$
$$= g[lo + i - Iso(1 + \alpha + \beta Z_{th}i)]$$

A partir de cette relation on déduit la valeur de la puissance modulée:

Pmod = i(g - Iso$\beta$Zth)

$$Comme\ Zth = \frac{Rth}{1 + Rth\ Cths}$$

$$Pmod = ig(1 - Iso\beta\ \frac{Rth}{1 + Rth\ Cths} = ig\ \frac{s + a}{s + b}$$

avec:

$$a = \frac{1}{Rth\ Cth} - \frac{Iso\beta}{Cth}$$

$$b = \frac{1}{Rth\ Cth} \quad a < b$$

Cette fonction de transfert (Pmod fonction de i) est celle d'un filtre passe-haut dont la courbe de réponse est semblable à celle du filtre de la figure 9 et dont

$$f1 = \frac{1}{2\pi a} \quad et \quad f2 = \frac{1}{2\pi b}$$

La fonction de transfert est aussi de même type que celle rencontrée avec la diode LED, et la compensation se fait avec un filtre passe-bas de même type.

La liaison optique avec émetteur laser et récepteur à photodiode PIN se comporte donc d'une manière identique à la chaîne utilisant une diode d'émission LED. Le schéma de cette liaison est donc identique à celui de la figure 11.

On pourra noter que dans le cas général, le filtre passe-bas de correction des effets thermiques linéaires dus à la diode d'émission doit avoir comme fonction de transfert l'inverse de la fonction de transfert due à l'effet thermique, soit:

$$\frac{1}{g(1 - \dfrac{Iso\beta Zth}{g})}$$

Dans ce qui suit on va analyser plus dans le détail le fonctionnement de la liaison optique comportant à l'émission une diode LED ou laser et à la réception une photodiode à avalanche, à l'aide du schéma complet de la figure 13.

Comme on l'a vu précédemment le comportement des diodes LED et des diodes lasers est identique vis-à-vis des phénomènes thermiques. Leur utilisation avec une photodiode PIN, composant insensible à la température, nécessitait une compensation réalisée à l'aide de trois filtres corrigeant uniquement l'effet thermique sur la diode LED ou laser.

Contrairement aux photodiodes PIN, les photodiodes à avalanche sont relativement sensibles à la température. Le gain de ces diodes décroît avec la température de jonction et, de ce fait, la variation du flux lumineux frappant la diode provoque, pour les fréquences basses, une distorsion comparable à celle rencontrée au niveau de la diode LED ou laser.

Quand une puissance $P = Po + p$ dans laquelle Po est la puissance continue et p la puissance de modulation frappe la photodiode à avalanche, elle produit un courant

$$I = Io + i$$

dans lequel Io est le courant continu et i le courant de modulation.

$I = GP$ avec G: pente de conversion puissance-courant.

Cette relation est valable pour une tension d'alimentation Va donnée ainsi que pour une température de jonction $T_J$.

La tension d'alimentation d'une diode à avalanche étant relativement élevée et la chute de tension aux bornes de la résistance qui convertit le courant en tension étant très faible, $IR \ll V_a$, la puissance électrique dissipée dans la photodiode est de $P_E = V_a.I$

La pente de conversion puissance-courant G décroît en fonction de la température de la jonction suivant une loi donnée approximativement par la relation:

$$G = \frac{Go}{1 + \dfrac{T_j - T_o}{T_R}}$$

avec:

Go pente pour $T = To$ (température de référence)
$T_R$ constante.

Compte tenu du filtrage passe-haut réalisé au niveau de l'émetteur (LED ou laser), les variations en puissance pour les fréquences basses sont très faibles et donc la température de la jonction de la photodiode varie peu par rapport à la valeur To obtenue en l'absence de modulation ($P = Po$).

Dans ces conditions:

$$\frac{T_j - T_o}{T_R} \ll 1$$

et:

$$G \# Go (1 - \frac{T_j - T_o}{T_R})$$

L'impédance thermique jonction-ambiante peut encore être représentée par une résistance thermique Rth shuntée par une capacité thermique Cth:

$$Zth = \frac{Rth}{1 + Rth\,Cths} \quad \text{avec } s = j\omega$$

La température de la jonction peut s'écrire:

$$T_J = T_A + RthV_aIo + ZthiV_a = T'_A + ZthiV_a$$

avec $T_A' = T_A + RthV_aIo$

La valeur de $\dfrac{Tj - To}{T_R}$ est de:

$$\frac{T_A' - To + ZthiV_a}{T_R} = \alpha + Zthi\beta$$

avec:

$$\alpha = \frac{T_A + RthV_aIo - To}{T_R}$$

$$\beta = \frac{V_A}{T_R}$$

Dans ces conditions:

$$I = Io + i = Go(1 - \alpha - ZthI\beta)(Po + p)$$
$$Io = Go(1 - \alpha)Po$$
$$i = Go(1 - \alpha)p - GoZthi\beta(Po + p)$$

La pente de conversion pour le signal modulé est de:

$$\frac{i}{P} = \frac{Go(1 - \alpha)}{1 + GoZth\beta(Po + p)}$$

Pour les fréquences basses de modulation, p est limitée par le filtre passe-haut de correction à l'émission, pour les fréquences élevées $Zth \to O$ et donc $p + Po$ n'intervient plus.

On peut donc écrire:

$$\frac{i}{P} \# \frac{Go(1 - \alpha)}{1 + GoZth\beta Po}$$

En remplaçant Zth par sa valeur on obtient:

$$\frac{i}{P} \# \frac{Go(1 - \alpha)}{1 + G\beta Po \dfrac{Rth}{1 + Rth\,Cths}}$$

$$= Go(1 - \alpha) \frac{s + a}{s + b}$$

avec:

$$a = \frac{1}{RthCth}$$

$$b = \frac{1}{RthCth} + \frac{GoPo}{Cth} \quad b > a$$

$$= \frac{1}{RthCth} + \frac{GoPoV_a}{T_RCth}$$

On constate que l'effet thermique de la photodiode à avalanche se présente à faible niveau sous la forme d'une fonction de transfert passe-haut identique à celle rencontrée pour les diodes LED ou laser.

Cette action linéaire peut se compenser avec un filtre passe-bas de type identique à ceux déjà utilisés à la réception au niveau des liaisons avec diode PIN.

On pourra noter que le filtre passe-bas 7 de correction des effets thermiques linéaires dus à la diode d'émission est représenté figure 13 dans le cas où l'impédance thermique de la diode d'émission Zth est une résistance thermique shuntée par une capacité thermique.

Dans le cas général, ce filtre doit avoir comme fonction de transfert l'inverse de la fonction de transfert due à l'effet thermique soit:

$$\frac{1}{g(1 - mTo') - IomV_DZth'}$$

lorsque la diode d'émission est une diode LED,

$$\frac{1}{g(1 - \dfrac{Iso\beta Zth'}{g})}$$

lorsque la diode est une diode laser.

Dans ces expressions, Zth' représente l'impédance thermique de la diode d'émission.

Le filtre passe-bas de correction des effets thermiques linéaires dus à la diode d'émission est également représenté sur la figure 13 dans le cas où l'impédance thermique Zth de la diode de réception est une résistance thermique shuntée par une capacité thermique. Dans le cas général, ce filtre doit avoir comme fonction de transfert l'inverse de la fonction de transfert due à l'effet thermique soit:

$$\frac{1 + GoZth\beta Po}{Go(1 - \alpha)}$$

La figure 13 représente le schéma complet de la liaison optique compensée lorsque la diode d'émission étant soit une diode LED, soit une diode laser, la photodiode de réception est à avalanche. On remarquera a priori que le schéma de la liaison ressemble à celui déjà représenté figure 6 et figure 11 de sorte que pour des circuits identiques ou équivalents les références utilisées sont les mêmes. Depuis l'entrée E, on trouve l'amplificateur 10 suivi du filtre 8, passe-haut corrigeant les effets thermiques non linéaires de la diode d'émission, de l'amplificateur 2 connecté à la diode d'émission 1, de la liaison optique proprement dite 3, une fibre optique par exemple, qui alimente la photodiode de réception, du type à avalanche 40 avec sa résistance de charge R. Cette photodiode est connectée à un amplificateur 5 suivi du filtre 6, passe-bas destiné à corriger les effets thermiques non linéaires de la diode d'émission, connecté à un amplificateur tampon 11 suivi du filtre 7 destiné à corriger les effets thermiques linéaires de la diode d'émission. Un amplificateur tampon 12 connecté en sortie du filtre 7, est connecté au filtre 9 passe-bas destiné à corriger les effets thermiques linéaires de la photodiode à avalanche 40. Un amplificateur tampon 15, figure 13, connecte le filtre 9 à la sortie S de la liaison.

On a ainsi décrit un système de transmission d'informations à modulation directe de la lumière à liaison optique et plus particulièrement à liaison optique dont on cherche à étendre la bande passante vers les fréquences basses et le continu.

### Revendications

1. Système de transmission d'informations à modulation directe de la lumière, à liaison optique à bande passante étendue vers les fréquences basses et le continu, comportant des moyens d'émission optique avec une diode émettrice (1) qui effectue la conversion de signaux électriques à transmettre sous forme de signaux optiques, par modulation directe, un conducteur optique (3) pour la transmission de ces signaux optiques, des moyens de réception optique avec une photodiode (4) pour effectuer la conversion inverse des signaux optiques reçus en signaux électriques, et des moyens de filtrage pour, d'une part, éviter des déformations de signal résultant de la température de jonction de ces diodes respectives et pour, d'autre part, accroître la bande passante du système aux fréquences basses et aux ondes continues, ces moyens comprenant des premiers moyens de filtrage pour éliminer les effets thermiques non linéaires des diodes et comportant, à l'émission, un filtre passe-haut (8) déterminé pour réduire le niveau des signaux électriques dont la fréquence est plus basse qu'une valeur basse-fréquence prédéterminée, et à la réception un premier filtre passe-bas (6) ayant une fonction de transfert inverse pour rétablir le niveau des signaux électriques basse-fréquence, le système étant caractérisé en ce qu'il comporte en outre, des seconds moyens de filtrage pour compenser les effets thermiques linéaires des diodes, ces seconds moyens comportant à la réception un deuxième filtre passe-bas (7) déterminé pour compenser les effets thermiques linéaires produits par la diode d'émission pour les signaux électriques basse-fréquence délivrés ledit filtre passe-haut.

2. Système de transmission selon la revendication 1, caractérisé en ce que les moyens de réception optique utilisent une photodiode PIN (4).

3. Système de transmission selon la revendication 1, caractérisé en ce que lesdits seconds moyens de filtrage comportent un troisième filtre passe-haut (9) pour compenser les effets thermiques linéaires produits par la photodiode réceptrice sur les signaux optiques reçus correspondant à des signaux électriques basse-fréquence.

4. Système de transmission selon la revendication 3, caractérisé en ce que les moyens de réception optique utilisent une photodiode à avalanche (40).

5. Système de transmission selon l'une quelconque des revendications 1 à 4, caractérisé en ce que les moyens d'émission optique utilisent une diode électro-luminescente dite LED (1).

6. Système de transmission selon l'une quelconque des revendications 1 à 4, caractérisé en ce que les moyens d'émission optique utilisent une diode laser (1).

7. Système de transmission suivant la revendication 1 ou 2, caractérisé en ce que les moyens de réception optique comportent en aval de la photodiode connectés en série à travers des circuits amplificateurs (5, 11, 12), lesdits premier et deuxième filtres passe-bas (6, 7).

8. Système de transmission suivant la revendication 3 ou 4, caractérisé en ce que les moyens de réception optique comportent, en aval de la photodiode, connectés en série à travers des circuits amplificateurs (5, 11, 12, 15), lesdits premier, second et troisième filtres passe-bas (6, 7, 9).

## Claims

1. System for the transmission of information by direct modulation of light, through an optical connection having a passband extended towards the low frequencies and continuity, comprising optical transmission means having a transmitter diode (1) performing the conversion of electrical signals to be transmitted into optical signals by direct modulation, an optical conductor (3) for the transmission of these optical signals, optical reception means comprising a photodiode (4) for performing the inverse conversion of the received optical signals into electrical signals, and filtering means for avoiding signal distorsions resulting from the temperature of the junction of these respective diodes, on the one hand, and extending the passband of the system towards low frequencies and continuous waves, on the other hand, these means comprising first filtering means for eliminating the non-linear thermal effects of the diodes and comprising, on the transmitter side, a high-pass filter (8) dimensioned to reduce the level of the electrical signals the frequency of which is less than a predetermined low frequency value, and on the reception side, a first low-pass filter (6) having an inverse transfer function for restoring the level of the electrical low frequency signals, the system being characterized in that it further comprises second filtering means in order to compensate for the linear thermal effects of the diodes, these second means comprising, on the reception side, a second low-pass filter (7) determined to compensate for the linear thermal effects produced by the transmitter diode for the low frequency electrical signals supplied by said high-pass filter.

2. Transmission system according to claim 1, characterized in that the optical reception means use a PIN photodiode (4).

3. Transmission system according to claim 1, characterized in that said second filtering means comprise a third high-pass filter (9) in order to compensate for the linear thermal effects produced by the receiver photodiode in the optical signal received corresponding to low frequency electrical signals.

4. Transmission system according to claim 3, characterized in that the optical reception means use an avalanche photodiode (40).

5. Transmission system according to any of claims 1 to 4, characterized in that the optical transmitter means use a so-called LED electro-luminescent diode (1).

6. Transmission system according to any of claims 1 to 4, characterized in that the optical transmitter means use a laser diode (1).

7. Transmission system according to claim 1 or 2, characterized in that the optical reception means comprise said first and second low-pass filters (6, 7) connected downstream from the photodiode and in series through amplifier circuits (5, 11, 12).

8. Transmission system according to claim 3 or 4, characterized in that the optical reception means comprise downstream from the photodiode, said first, second and third low-pass filters (6, 7, 9) connected in series through amplifier circuits (5, 11, 12, 15).

## Patentansprüche

1. System zur Übertragung von Informationen mit direkter Lichtmodulation und mit einer optischen Verbindung, deren Durchlassband nach den niedrigen Frequenzen und zum kontinuierlichen Bereich hin ausgedehnt ist, versehen mit optischen Sendemitteln, die eine Sendediode (1) zur Umsetzung der zu übertragenden elektrischen Signale durch direkte Modulation in optische Signale enthalten, mit einem optischen Leiter (3) zur Übertragung dieser optischen Signale, optischen Empfangsmitteln, die eine Fotodiode (4) zur Durchführung der umgekehrten Umsetzung der empfangenen optischen Signale in elektrische Signale enthalten, und Filtermitteln, um einerseits Signalverformungen zu verhindern, die aus der Temperatur des Übergangs dieser jeweiligen Dioden resultieren, und um andererseits das Durchlassband des Systems zu niedrigen Frequenzen und zu kontinuierlichen Signalen hin auszudehnen, wobei diese Mittel erste Filtermittel zum Eliminieren der nichtlinearen thermischen Effekte der Dioden umfassen, welche sendeseitig ein Hochpassfilter (8) enthalten, das ausgelegt ist, um den Pegel der elektrischen Signale zu vermindern, deren Frequenz niedriger als ein vorbestimmter Niederfrequenzwert ist, und empfangsseitig ein erstes Tiefpassfilter (6) enthalten, dessen Übertragungsfunktion entgegengesetzt ist, um den Pegel der niederfrequenten elektrischen Signale wieder System dadurch gekennzeichnet ist, dass es ferner zweite Filtermittel umfasst, um die linearen thermischen Effekte der Dioden zu kompensieren, wobei diese zweiten Mittel empfangsseitig ein zweites Tiefpassfilter (7) umfassen, das ausgelegt ist, um die linearen thermischen Effekte zu kompensieren, welche durch die Sendediode für niederfrequente elektrische Signale erzeugt werden, die von dem genannten Hochpassfilter abgegeben werden.

2. Übertragungssystem nach Anspruch 1, dadurch gekennzeichnet, dass die optischen Empfangsmittel von einer PIN-Fotodiode (4) Gebrauch machen.

3. Übertragungssystem nach Anspruch 1, dadurch gekennzeichnet, dass die genannten zweiten Filtermittel ein drittes Hochpassfilter (9) umfassen, um die linearen thermischen Effekte zu kompensieren, welche durch die Empfangsfotodiode bei den empfangenen optischen Signalen erzeugt werden, die niederfrequenten elektrischen Signalen entsprechen.

4. Übertragungssystem nach Anspruch 3, dadurch gekennzeichnet, dass die optischen Empfangsmittel von einer Lawinen-Fotodiode (40) Gebrauch machen.

5. Übertragungssystem nach einem der Ansprüche 1 bis 4, dadurch gekennzeichnet, dass die optischen Sendemittel von einer sogenannten LED-Leuchtdiode (1) Gebrauch machen.

6. Übertragungssystem nach einem der Ansprüche 1 bis 4, dadurch gekennzeichnet, dass die optischen Sendemittel von einer Laserdiode (1) Gebrauch machen.

7. Übertragungssystem nach Anspruch 1 oder 2, dadurch gekennzeichnet, dass die optischen Empfangsmittel hinter der Fotodiode und über Verstärkerschaltungen (5, 11, 12) in Reihe geschaltet das erste und das zweite der genannten Tiefpassfilter (6, 7) enthalten.

8. Übertragungssystem nach Anspruch 3 oder 4, dadurch gekennzeichnet, dass die optischen Empfangsmittel hinter der Fotodiode und über Verstärkerschaltungen (5, 11, 12, 15) in Reihe geschaltet das erste, zweite und dritte der genannten Tiefpassfilter (6, 7, 9) enthalten.

# FIG_1

# FIG_2

(a)                                        (b)

# FIG_3

(a)                                        (b)

# FIG_4

(a)

(b)

# FIG_5

# FIG_6

FIG_7

FIG_8

FIG_9

(a)  (b)

FIG_10

(a)  (b)

FIG_11

FIG_12

FIG_13